# EUROPÄISCHE PATENTSCHRIFT

(11) **EP 0 530 549 B1**
(45) Veröffentlichungstag und Bekanntmachung des Hinweises auf die Patenterteilung: **02.06.1999**
(21) Anmeldenummer: 92113666.9
(22) Anmeldetag: 11.08.1992
(51) Int. Cl.: B32B 27/08, A22C 13/00, B65D 65/40

(54) **Mindestens 3schichtig coextrudierte biaxial gereckte Schlauchfolie mit innenliegender PA-Schicht**
At least three-layered coextruded, biaxially stretched tubular film with an inner layer of PA
Feuille tubulaire étirée biaxialement et coextrudée contenant au moins 3 couches, la couche intérieure se composant de polyamide

(30) Priorität: 23.08.1991 DE 4128081
(43) Veröffentlichungstag der Anmeldung: 10.03.1993
(73) Patentinhaber: Wolff Walsrode Aktiengesellschaft, D-29655 Walsrode (DE)
(72) Erfinder: Hennig-Cardinal von Widdern, Michael, W-3030 Walsrode (DE); Weber, Gunter, Dr., W-3032 Fallingbostel (DE)
(74) Vertreter: Pettrich, Klaus-Günter

(56) Entgegenhaltungen:
- EP-A- 0 277 839
- EP-A- 0 288 972
- DE-A- 4 001 612
- GB-A- 2 025 839
- NL-A- 8 400 915
- US-A- 4 695 491

## Beschreibung

Die Erfindung betrifft eine coextrudierte, biaxial gereckte Schlauchfolie zur dauerhaften und faltenfreien Umhüllung von in flüssigem oder pastösem Zustand abgepackten Füllgutem, insbesondere Lebensmitteln wie Brüh-, Kochwurst und Schmelzkäse.

Umhüllungen für Lebensmittel, wie z.B. Koch- oder Brühwurst oder mittels gleichem oder ähnlichem Verfahren abgepackte Füllgüter, müssen ein umfangreiches Anforderungsprofil erfüllen, um der Anwendung in der Praxis gerecht zu werden.

Es sind dies die Forderungen:
a) **Rückstellvermögen**
   Sowohl mit der Abkühlung des zuvor erhitzten Füllgutes als auch mit dem Gewichtsverlust durch Abdampfen von Wasser wahrend der Lagerung geht eine Volumenverringervng der abgepackten Ware einher. Unabhängig von der Volumenverringerung muß die Folie faltenfrei um den Verpackungsinhalt anliegen, um der Ware ein verkaufsförderndes Aussehen zu verleihen.
b) **Festigkeit**
   Das Füllgut wird mit hoher Geschwindigkeit bei einem Fülldruck von bis zu 1.6 bar in die Schlauchfolie gepreßt. Das Folienmaterial soll nach der Druckbeaufschlagung weder partielle Aufweitungen (Beulen) noch eine wesentliche Aufweitung des Kalibers (Durchmesser) aufweisen. Durch die Folienqualität muß gewährleistet sein, daß der hohe Fülldruck vornehmlich zu einer elastischen Verformung der Schlauchfolie führt.
c) **Temperaturbeständigkeit**
   Die Hülle muß einer Temperatur-/Spannungsbelastung derart standhalten, daß sie die Druckbeanspruchung durch das Füllgut auch während der Kochprozedur ohne übermäßige Verformung übersteht.
d) **Barriereeigenschaften**
   Für die unter anderem angestrebte Anwendung der Schlauchfolie als Umhüllung für Brüh- und Kochwurst sind gute Barriereeigenschaften hinsichtlich Sauerstoff- und Wasserdampfpermeation erforderlich.
   Die Sauerstoffbarriere verhindert eine fruhzeitige Vergrauung des der Folieninnenseite zugekehrten Brätes.
   Die Wasserdampfbarriere behindert den durch Abdampfen von Wasser aus dem Füllgut induzierten Gewichtsverlust der Verkaufsware, der einerseits den Erlös des Produktes reduziert und andererseits infolge von Volumenverlust zu faltigen unansehnlichen Produkten führen kann.
e) **Bräthaftung**
   Speziell für die Anwendung als Brüh- und Kochwurstumhüllung soll die Schlauchfolie Bräthaftung aufweisen. Unter Bräthaftung versteht der Fachmann das Haftungsvermögen der Hülle am Füllgut. Die Affinität zwischen Umhüllung und Füllgut verhindert den Absatz von Gelee.
f) **Raffbarkeit**
   Vor der industriellen Verarbeitung mittels Füllautomaten wird die Schlauchfolie in die Form einer Raffraupe überführt. Dabei wird der Folienschlauch längs der Schlauchachse gefältelt und anschließend im Verhältnis 30:1 bis 60:1 komprimiert. Die Folie muß der extrem hohen Knickbeanspruchung ohne Beschädigung standhalten.
g) **Lebensmittelrecht**
   Das Produkt darf selbstverständlich nur Materialien enthalten, die nach den lebensmittelrechtlichen Gesetzen und Empfehlungen als unbedenklich eingestuft werden.
h) **Ökologie**
   Das Produkt sollte nur aus Materialien bestehen, die sowohl in ihrer Herstellung, Verarbeitung und Anwendung als auch in ihrer Entsorgung aus ökologischer Sicht unbedenklich sind.

Bisher sind keine biaxial gereckten Schlauchfolien aus thermoplastischen Kunststoffen bekannt, die dem umfangreichen Anforderungsprofil in allen Punkten genügen. Die stetig voranschreitende Ablösung von chlorhaltigen Verpackungsmitteln zwingt die Hersteller und Verarbeiter von Kunststoffdarmhüllen aus VDC/VC-Copolymerisaten alternative Verpackungslösungen anzubieten. Da die gereckte Folie aus VDC/VC-Copolymerisat die an sie gestellten Forderungen nach "Festigkeit", "Sauerstoff-", "Wasserdampfbarriere" und "Bräthaftung" mit nur einem Polymer erfüllen konnte, waren die Folienhersteller bereit, für das VDC/VC-Copolymerisat einen relativ hohen Rohstoffpreis zu zahlen. Die Weiterentwicklung der Coextrusionstechnik ermöglicht demgegenüber heute die Kombination von Polymereigenschaften im Coextrusionsverbund unter Einsatz von preisgünstigeren Polymeren.

Seitens der Schlauchfolienhersteller besteht das Interesse, ein den Qualitätsansprüchen der Anwender entsprechendes Produkt möglichst sicher und preiswert herzustellen, um einerseits die Abfallrate weitesgehend zu reduzieren und eine reproduzierbare Folienqualität liefern zu können und andererseits ein hochveredeltes Produkt preiswert anbieten zu können.

Das bekannte Herstellungsverfahren der biaxial gereckten Schlauchfolie gliedert sich in die Verfahrensschritte:
- Plastifizieren der thermoplastischen Polymere
- Überführen der Schmelze in die Schlauchform
- Rasche Abkühlung des schmelzeflüssigen Primärschlauches in den Festkörperzustand, um die Bildung von Kristalliten weitestgehend zu unterdrücken
- Wiedererwärmen des Primärschlauches auf eine für die biaxiale Verstreckung geeignete Temperatur
- Biaxiales Verstrecken des wiedererwärmten Primärschlauches durch Anlegen einer Druckdifferenz zwischen Schlauchinnenvolumen und der Schlauchumgebung und durch die die Längsverstreckung unterstützende Längsabzugskraft
- Thermofixieren der biaxial gereckten Schlauchfolie
- Aufwickeln der Schlauchfolie
- Entsprechend den späteren Erfordernissen unterschiedliche Konfektionierungsschritte (z.B. Schneiden, Bedrucken, Raffen u.a.)

Unter der biaxialen Verstreckung versteht der Fachmann die Quer- und Längsverstreckung des thermoplastischen Extrudates bei Temperaturen zwischen Glasübergangstemperatur und Schmelztemperatur. Die biaxiale Reckung kann beispielsweise mittels einer mit einem Gas- oder Fluiddruckpolster gefüllten Blase erfolgen, die zwischen zwei mit unterschiedlich hohen Umfangsgeschwindigkeiten laufenden Walzenpaaren gas- bzw. fluiddicht eingeschlossen ist. Während das Verhältnis der unterschiedlichen Walzenumfangsgeschwindigkeiten dem Längsreckgrad entspricht, errechnet sich der Querreckgrad aus dem Verhältnis des Schlauchdurchmessers im gereckten Zustand zu dem im ungereckten Zustand. Der Flächenreckgrad resultiert aus dem Produkt des Längsreckgrades multipliziert mit dem Querreckgrad.

Während der Verstreckung richten sich die Moleküle des im Festkörperzustand befindlichen Folienschlauches derart aus, daß der Elastizitätsmodul und die Festigkeit in erheblichem Maß gesteigert werden.

Ausreichende Festigkeit der Schlauchfolie ist dann gegehen, wenn sich die Verpackungshülle heim Füllvorgang und während des Sterilisierens vernehmlich elastisch verformt. Die Verpackungshülle muß ihre zylindrische Form beibehalten und darf sich nicht ausheulen oder krümmen.

Die biaxiale Verstreckung von Schlauchfolien aus teilkristallinen thermoplastischen Polymeren, wie z.B. Polyamid, Polyvinylidenchlorid erfordert eine rasche Abkühlung des schmelzeflüssigen Primärschlauches, da sonst die sich ausbildende kristalline Überstruktur die nachfolgende biaxiale Verstreckung behindert. Die Behinderung der biaxialen Verstreckung zeigt sich in der Praxis durch eine unruhige Reckblase, d.h. der Reckblasenhals wandert in wechselnder Richtung entlang der Schlauchachse, mit der Folge, daß der Schlauchdurchmesser des Endproduktes ungleichmäßig wird.

Für die Verarbeitung von teilkristallinem, aliphatischem Polyamid (PA) zu biaxial gereckten Folien und deren anschließende Verwendung als Brüh- und Kochwursthülle gibt die Patentliteratur zahlreiche Hinweise. Darin werden sowohl technische Lösungen für den Herstellungsprozeß der biaxial gereckten Schlauchfolien als auch Rezepturentwicklungen für verbesserte anwendungstechnische Eigenschaften veröffentlicht.

DE4001612 beschreibt eine mehrschichtige Schlauchfolie zur Verpackung von pastösen Füllgütern, wobei die äußere und die innere Schicht aus aliphatischem Polyamid, aliphatischem Copolyamid oder einer Polymermischung aus wenigstens einer der beiden Verbindungen besteht. Eine derartige Schlauchfolie besitzt keine ausreichende Wasserdampfsperre.

EP277839 hat eine Wärmeschrumpffolie zum Inhalt, welche aus mindestens zwei Schichten besteht, wobei Schicht A aus hauptsächlich Polyamid 15-35 Gew.-% EVOH (verseiftes Ethylen-Vinyl-Acetat) besteht und die Schicht B wenigstens 55 Gew.-% EVOH enthält. Diese Folie hat auf der Innenseite grundsätzlich eine Siegelschicht, daher ist sie nicht als geraffte Schlauchfolie geeignet.

Die DE 2 850 181 weist darauf hin, daß durch das Einmischen von olefinischen Copolymeren in das PA eine verbesserte Reckbarkeit erreicht werden kann. Dies zeigt sich nach Angaben der Patentinhaberin darin, daß sich eine optisch eindeutig feststellbare Vergleichmäßigung der Reckblase einstellt und zum anderen eine erhebliche Herabsetzung der erforderlichen Reckkräfte beobachtet wird.

Durch das Einmischen von olefinischen (Co-)Polymeren oder anderen Polymeren, die eine geringere Wasserdampfpermeation als aliphatische Polyamide aufweisen, kann die Wasserdampfbarriere von Folien mit einer PA-Matrix deutlich verbessert werden; im Vergleich zu Hüllen aus PVDC-Copolymerisaten ist die Wasserdampfbarriere jedoch als unzureichend zu beurteilen und damit verbesserungswürdig. Bei der Verarbeitung von Polymerblends treten häufig Schwierigkeiten hinsichtlich einer konstanten Produktqualität auf, da die Verteilung der Blendkomponenten in der Matrix wesentlichen Einfluß auf die Verstreckfähigkeit und die Barriereeigenschaften hat. Aufgrund der Tatsache, daß die Qualität der Verteilung von sehr vielen Parametern der Verarbeitung abhängt (z.B. Viskositäten der Blendpartner, Verarbeitungstemperaturen, Verstreckraten, Schneckengeometrie, usw.), ist die Produktion einer reproduzierbaren Produktqualität äußerst schwierig.

Die mittels Anwendung der Blendtechnik erreichbare Verbesserung der Wasserdampfbarriere von einlagigen PA-Folienschläuchen resultiert aus der flächenförmigen Einlagerung der Blendkomponenten in der PA-Matrix. Die Größe der eingelagerten Flächen wird insbesondere durch den Grad der biaxialen Verstreckung der Folie beeinflußt.

Die flächigen Einlagerungen bilden allerdings keine geschlossene Folienschicht und können dementsprechend nicht in dem Maße die Wasserdampfpermeation reduzieren, wie dies bei Anwendung der Coextrusionstechnik möglich ist. Daraus resultiert, daß durch den Einsatz der Coextrusionstechnik bei gleichem Materialeinsatz eine deutlich verbesserte Wasserdampfbarriere erreicht wird. Das birgt ökonomische und ökologische Vorteile in sich.

Ähnliche Vorgehensweisen werden in den Dokumenten EP 0 216 094 und DE 3 801 344 beschrieben.

Durch die Beimischung von Ethylenvinylalkoholcopolymeren (EVOH) zum PA erreicht man gemäß EP 0 216 094 eine verbesserte Sauerstoffbarriere bei gleichzeitig hoher Durchlässigkeit von Rauch-Geschmacksträgern. Neben der bereits erwähnten Schwierigkeit, eine reproduzierbare Produktqualität herzustellen, führt die ungenügende Temperaturstabilität von EVOH während der Vermischung mit Polyamiden, die bei hoher Temperatur verarbeitet werden, zu einem unerwünschten Abbau des EVOH.

In der DE-OS 3 801 344 wird eine biaxial gereckte Schlauchfolie aus einem ternären Blend beschrieben. Während der Hauptgewichtsanteil der Folie aus aliphatischem PA besteht, werden weitere Anteile aus Polyterephthalsäureester und aromatischem PA zugemischt. Ziel dieser Blendstruktur ist nach Angaben des Anmelders eine homogene Farbpigmentverteilung in der Folie, die durch Farbmasterbatchzubereitung mit dem aromatischen PA und anschließender Zumischung erreicht werden kann.

Wie alle zuvor aufgeführten einschichtigen Folien auf der Basis von aliphatischen Polyamiden erfüllt auch diese Folienstruktur weder die Anforderungen der Produzenten nach sicherer Reproduzierbarkeit noch den Anforderungen der Verarbeiter nach hoher Barrierewirkung gegenüber Wasserdampf- und Sauerstoffpermeation.

Die seitens der Anwender geforderte Qualität der Schlauchfolie läßt sich unter ökonomischen und ökologischen Gesichtspunkten nur durch coextrudierte gereckte Schlauchfolien erfüllen.

In der japanischen Anmeldung J 1 014 032 wird eine biaxial gereckte coextrudierte Schlauchfolie für die Anwendung Brüh- und Kochwurstumhüllung aus 3 Schichten beschrieben, wobei die äußere dem Füllgut abgewandte Lage aus einem aliphatischen PA und die innere Lage aus einem Ethylen-Acrylsäure-Copolymeren besteht. Die zwischen der äußeren und inneren Lage angeordnete mittlere Schicht aus PP-bzw. PE-Copolymerem dient als Haftvermittler. Die innere Polymerschicht aus Ethylen-Acrylsäure-Copolymeren übernimmt hierbei die Funktion der Bräthaftung. Gemäß einer nachfolgenden Anmeldung, GB 2 205 273, wird die Bräthaftung der innenliegenden LLDPE-Schicht durch eine aufwendige, auf die Innenseite des Folienschlauches wirkende Korona-Vorbehandlung, verbessert.

Aufgabe der Erfindung war es, dem Anwender eine ökologisch verträgliche, biaxial verstreckte Schlauchfolie mit verbesserter Barrierewirkung und verbesserten anwendungstechnischen Eigenschaften zur Verfügung zu stellen.

Gegenstand der Erfindung ist eine coextrudierte biaxial gereckte Schlauchfolie zur Umhüllung von in flüssigem oder pastösem Zustand abgepackten Füllgütern, insbesondere Lebensmitteln, die im befüllten Zustand aufgrund ihrer Barrierewirkung gegen Wasserdampf und Sauerstoff das Füllgut während einer längeren Lagerzeit dauerhaft faltenfrei und ohne sichtbare Sauerstoffeinwirkung umhüllt, deren innere, dem Füllgut zugekehrte Lage, Bräthaftung aufweist, dadurch gekennzeichnet, daß diese aus mindestens 3 Schichten besteht, die
- als äußere Schichtmindestens 1 Lage aus olefinischen (Co-)Polymeren
- als Kernschicht mindestens 1 Sauerstoff-sperrende Lage aus EVOH, (teil-)aromatischem und/oder aliphatischem (Co-)Polyamid
- als innere Schicht mindestens eine Lage aus aliphatischem (Co-)Polyamid
umfassen.

Die hohe Barrierewirkung gegenüber Sauerstoff und Wasserdampf resultiert aus der Kombination der Barriereeigenschaften der einzelnen Polymerschichten, den Grenzflächen der einzelnen Schichten und der molekularen Überstruktur als Folge der Herstellungstechnik mit der biaxialen Verstreckung und der Thermofixierung und erfordert nicht die zusätzliche Einlagerung von chlorhaltigen Barriereschichten aus PVC oder PVDC.

In einer bevorzugten Ausführungsform werden für die innenliegende Schicht (1) Polyamid-6 oder Copolyamide mit einem überwiegenden Anteil an Caprolactam verwendet. Diese Polyamide können alleine oder als Polymermischung untereinander oder als Polymermischung mit anderen Polymeren, wie z.B. (teil-)aromatischen Polyamiden, PE (-Copolymeren), PP (-Copolymeren), Polyester, usw., mit überwiegendem PA-Anteil verarbeitet werden.

In einer besonders bevorzugten Ausführungsform beträgt die Schichtdicke der innenliegenden PA-Schicht 15 bis 30 µm.

Die Anordnung der Schicht aus aliphatischen PA als innere, dem Füllgut zugekehrte Lage beinhaltet eine Vielzahl von Vorteilen:
1. Polyamid gewährleistet eine sichere Bräthaftung.
2. Der hohe Schmelzpunkt von PA stellt sicher, daß auch bei hoher Kochtemperatur während des Sterilisationsprozesses die Schlauchinnenlage im Festkörperzustand verbleibt.
3. Die im Vergleich zur Außenschicht aus olefinischen Polymeren niedrigere optimale Verstecktemperatur des innenliegenden PA's erlaubt eine Erwärmung des Primärschlauches (PS) in einer sehr kurzen Zeitspanne. Bei der kurzzeitigen Erwärmung des PS mit hoher Temperatur stellt sich aufgrund der niedrigen Wärmeleitfähigkeit der thermoplastischen Polymere ein Temperaturprofil über der Gesamtschichtstärke des PS ein. Bei optimierten Verfahrensparametern und angepaßter Polymerauswahl recken die Einzelschichten bei optimaler polymerspezifischer Verstrecktemperatur. Neben der Vergleichmäßigung des Reckprozesses kann dadurch eine erhebliche Verkürzung der Erwärmungsstrecke erreicht werden.
4. Die Flexibilität des Folienverbundes kann durch Wässerung der PA-Innenschicht verbessert werden, ohne daß das Wasser während der Zwischenlagerung der Schlauchfolie ausdampft (äußere olefinische Wasserdampfsperre).

Durch Wasseraufnahme der innenliegenden PA-Schicht kann die Glasübergangstemperatur des PA's auf Werte unter 0°C reduziert werden, mit der Folge, daß die Folie insgesamt weicher wird.

Die Flexibilität der Folie hat für Konfektionierungsverfahren (wie Clippen und Raffen) eine entscheidende Bedeutung, da die Folie hierbei extremer Knickbeanspruchung ausgesetzt ist. Die Knickbeanspruchung kann zu Folienbrüchen während der Konfektionierung oder zu Knickfalten an der Füllgutumhüllung führen.

In einer bevorzugten Ausführung wird der Wässerungsschritt in line zum Extrusions-, Reck- und Temperprozeß durchgeführt, indem in die Schlauchfolie zwischen zwei Walzenpaaren eine Wasserblase eingegeben wird. Das zweite Walzenpaar (Folienauslauf) weist dabei einen kleinen Spalt auf, der ein kontinuierliches Mitschleppen kleiner Wassermengen gewährleistet. Die Wasseraufnahme, bis zur Sättigung des innenliegenden PA's, erfolgt dann während der Zwischenlagerung der Rollenware. Die Bedruckbarkeit der Schlauchfolie wird durch die Wässerung nicht gestört, da die zu bedruckende äußere olefinische Schicht als Wasserdampfsperre wirkt.

Für den Fall, daß die konfektionierte Ware feuchtigkeitsdicht verpackt wird, erhält der Kunde (Füllgutabpacker) die Folie in füllfertig konditioniertem Zustand.

Die in der Fleisch-verarbeitenden Industrie übliche Wässerung der Folie vor dem Füllvorgang (mit dem Ziel der Verbesserung der Flexibilität) kann ausgelassen werden. Da dieser Verarbeitungsschritt aufgrund variabler Wässerungszeiten (unvollständige Wasseraufnahme), aufgrund variabler Wassertemperatur (Schrumpfauslösung, unterschiedliche Geschwindigkeit der Wasseraufnahme), aufgrund Behinderung der Wasseraufnahme durch den Farbdruck und aufgrund von Kontamination der Folie durch verunreinigtes Wasser vielfach eine Quelle von Mängeln ist, ist die Belieferung des verarbeitenden Gewerbes mit füllfertig konditionierter Ware erstrebenswert.

Die mittlere, bzw. Kern-Schicht (2) der erfindungsgemäßen Schlauchfolie besteht aus EVOH-Copolymeren, (teil-)aromatischem und/oder aliphatischem PA. Diese Schicht hat insbesondere die Funktion der Sauerstoffbarriere.

Die außenliegende Schicht wird durch olefinische (Co-)Polymere gebildet und hat insbesondere die Funktion der Wasserdampfbarriere. Die Wasserdampfbarriere der olefinischen Schicht reduziert den Gewichtsverlust des Füllgutes während einer 2-bis 3wöchigen Lagerung auf ein Niveau, das dem von PVDC-Hüllen entspricht.

Des weiteren ermöglicht die Anordnung der olefinischen Schicht als Außenlage die Wässerung der innenliegenden PA-Schicht in line zum Extrusionsprozeß, ohne daß das Wasser in den üblichen Zeiträumen der Zwischenlagerung bis zur weiteren Konfektionierung abdampft.

Anwendung finden olefinische (Co-)Polymere auf Basis von Ethylen und Propylen.

Erstaunlicherweise stört es nicht, wenn die optimale Verstrecktemperatur der außenliegenden olefinischen Schicht höher ist, als die der innenliegenden PA-Schicht. Bei Ausführung dieser Schicht als Lage mit hoher Verstrecktemperatur kann der zu verstreckende Primärschlauch kurzzeitig mit einem hochtemperierten Luftstrahl erwärmt werden. Dadurch bildet sich ein Temperaturprofil über der Wandstarke des PS aus, wobei die Außenschicht eine höhere Temperatur aufweist als die Innenschicht.

Der maximal erreichbare Flächenreckgrad (Längsreckgrad x Quetreckgrad) von Folien aus polyolefinischen Polymeren ist im allgemeinen größer als der von Polyamiden. Bei der Verstreckung des beanspruchten Folienverbundes richtet sich der Flächenreckgrad nach der/den Polyamidschicht(en) aus und erreicht Werte zwischen 6 und 12.

Bei der Herstellung der mehrschichtigen Schlauchfolie dominiert das PA nicht nur hinsichtlich des erreichbaren Flächenreckgrades sondern auch bei der Festlegung der Reckparameter wie Blaseninnendruck und Erwärmungstemperatur und -strecke.

Zwischen den Schichten (1)-(2) und (2)-(3) können Haftvermittlerschichten eingefügt werden. Die Haftvermittlerschichten weisen chemische und/oder physikalische Affinität zu den angrenzenden Schichten derart auf, daß ihre haftvermittelnde Wirkung auch nach dem Prozeß der biaxialen Verstreckung und der Kochprozedur erhalten bleibt. Für diese Funktion eignen sich im besonderen PE-und PP-Copolymere mit funktionellen Gruppen.

Die Haftvermittlerschichten übernehmen desweiteren die Funktion einer zusätzlichen Wasserdampfbarriere. Insbesondere bei der Anwendung von EVOH als Sauerstoff-Sperrschicht resultiert aus der Wasserdampf-abschirmenden beidseitigen Einkapselung eine Verbesserung der Sauerstoffbarriere bei hoher Luftfeuchtigkeit.

Sauerstoffpenetration bewirkt an der für den Verbraucher sichtbaren Oberfläche der Brüh- bzw. Kochwurst Brätvergrauung. Fortgeschrittene Brätvergrauung verleiht der Ware ein verkaufshemmendes Aussehen, was insbesondere dann zum Tragen kommt, wenn Waren unterschiedlichen Herstellungsdatums in der Ladentheke nahe beieinander liegen.

### Beispiele

Die im nachfolgenden aufgeführten Beispiele wurden an einer 5-Schicht-Schlauchcoextrusionslinie realisiert. Die Plastifizierung und Homogenisierung der eingesetzten Polymere erfolgte mit Hilfe von 5 separaten Extrudern.

In den Fällen, bei denen der Folienverbund nur durch 4 Polymerschichten (mit wechselnder Funktion) gebildet wurde, sind 2 identische Polymertypen nebeneinandergelegt worden.

### Beispiel 1

Die Polymere (A), (B1), (B2), (C1), (D) werden getrennt voneinander durch 5 Extruder plastifiziert und homogenisiert und mittels einer 5-Schicht-Coextrusionsdüse in die Schlauchform überführt.
Der Folienschlauch besitzt von außen nach innen die Struktur:
1) A/B1/C1/B2/D

- Polymer A ist ein Polypropylen-Copolymer mit Ethylen-Einheiten (Eltex PKL 415 von Solvay),
- Polymer B1 hat die Funktion eines Haftvermittlers (HV) und ist ein PP-Copolymer mit funktionellen Gruppen (Admer QF 551 von Mitsui),
- Polymer C1 ist ein Ethylen-Vinylalkohol-Copolymer (EVAL EP F101 BZ von Kuraray),
- Polymer B2 hat die Funktion eines Haftvermittlers (HV) und ist ein PE-Copolymer mit funktionellen Gruppen (Admer QF 551 von Mitsui),
- Polymer D ist ein Polyamid 6 (B40 F von Bayer).

Das aus der Düse austretende schlauchförmige Coextrudat wird sowohl von außen als auch von innen mit auf 10°C temperiertem Wasser abgeschreckt. Das Kühlwasser im Schlauchinneren wird durch ein dicht abschließendes Walzenpaar abgequetscht. Dieses Walzenpaar übernimmt gleichzeitig die Aufgabe des Schmelzeabzuges aus der Düse. Das vollständige Entfernen der Restfeuchte von der äußeren Oberfläche des Primärschlauches (PS) erfolgt mittels einer mechanischen Abstreifvorrichtung und eines Luftstrahls.
Der so erhaltene unverstreckte PS hat einen Durchmesser von 25 mm und von außen nach innen folgende Schichtdickenverteilung:
A = 200µm, B1 = 50µm, C1 = 100µm, B2 = 50µm, D = 200µm.

Nach der ca. 1 Sekunde andauernden Wiedererwärmung mit einem 145°C heißen Luftstrom reckt der PS biaxial durch Einschluß einer Luftblase zwischen zwei Walzenpaaren mit unterschiedlichen Umfangsgeschwindigkeiten um das 3,3fache quer und das 3,1fache längs.
Die biaxiale Verstreckung erfolgt zu einem Zeitpunkt, da der Primärschlauch an seiner äußeren Oberfläche eine weitaus höhere Temperatur aufweist, als an seiner Innenseite aus PA.

Wiederum zwischen zwei gasdicht abschließenden Walzenpaaren durchläuft der biaxial gereckte Folienschlauch für 15 Sekunden eine auf 160°C temperierte Wärmebehandlungszone (unvollständige Thermofixierung), wobei ein von innen wirkendes Gasdruckpolster weitestgehend den Schrumpf verhindert. Die so erhaltene biaxial gereckte, wärmebehandelte Schlauchfolie besitzt eine Gesamtschichtstärke von 58 µm.

Die Liegebreitenschwankung des flachgelegten Folienschlauches beträgt über einen beobachteten Zeitraum von 30 Minuten weniger als 1 mm.

Vor der nachfolgenden anwendungstechnischen Prüfung wird der Folienschlauch vollflächig bedruckt und anschließend unter Anwendung eines Öl-Raffschmiermittels gerafft. Die Raffraupen werden feuchtigkeitsdicht verpackt, damit die innenliegende PA-Schicht während der Zeit der Zwischenlagerung nicht austrocknet.

Im Rahmen der anwendungstechnischen Prüfung wird die konfektionierte Schlauchfolie, ohne diese vorher zu wässern, mit Leberwurstbrät gefüllt, 45 Minuten bei 75°C gebrüht, mit kaltem Wasser abgeduscht und im Kühlhaus vollständig abgekühlt.

Die Schlauchfolie umhüllt das Wurstbrät glatt und prall und zeigt keine Faltenbildung in Form von Raffalten auf.

Die Gewichtsverluste durch Abdampfen von Wasser über einen Lagerungszeitraum von 20 Tagen betragen 0,15 Gew.-%; das Leberwurstbrät erfährt an seiner der Folie zugekehrten Seite keine sichtbare Brätvergrauung. Die Folie laßt sich sehr gut wendelförmig vom Füllgut abschälen.

### Beispiele 2 und 3

In den Beispielen 2 und 3 wird die Kernschicht aus EVOH (Beispiel 1) durch (teil-)aromatisches PA (C2) bzw. PA 6.12 (C3) ersetzt. Daraus resultieren folgende Beispielstrukturen:
2) A/B1/C2/B2/D
3) A/B1/C3/B2/D

Bei gleichem Verfahrensablauf wie in Beispiel 1 werden Primärschläuche mit folgender Schichtdickenverteilung erzeugt:
A = 200µm, B1 = 50µm, C2/C3 = 100µm, B2 = 50µm, D = 200µm.

Die biaxial gereckte, wärmebehandelte Schlauchfolie besitzt eine Gesamtschichtstärke von 58 µm.
Die Liegebreitenschwankung des flachgelegten Folienschlauches ist über einen beobachteten Zeitraum von 30 Minuten kleiner als 1,2 mm.

Die weiteren Verarbeitungsschritte, wie Wässern, Bedrucken, Raffen und anwendungstechnischer Test werden gemäß Beschreibung in Beispiel 1 durchgeführt.

Die Ergebnisse der anwendungstechnischen Untersuchung sind in Tabelle 1 zusammengefaßt.

### Beispiele 4 und 5

Die Folienstrukturen aus den Beispielen 4 und 5 sind nahezu identisch mit den Beispielen 2 und 3, mit dem Unterschied, daß die Haftvermittlerschichten (B2) ersatzlos gestrichen werden.
Die Folienschläuche besitzen demnach von außen nachinnen die Strukturen:
4) A/B1/C2/D
5) A/B1/C3/D

Bei gleichem Verfahrensablauf wie in Beispiel 1 werden Primärschläuche mit folgender Schichtdickenverteilung erzeugt:
A = 200µm, B1 = 50µm, C2/C3 = 100µm, D = 200µm.

Die biaxial gereckte, wärmebehandelte Schlauchfolie besitzt eine Gesamtschichtstärke von 54 µm.
Die Liegebreitenschwankung des flachgelegten Folienschlauches ist über einen beobachteten Zeitraum von 30 Minuten kleiner als 1,3 mm.

Die weiteren Verarbeitungsschritte, wie Wässern, Bedrucken, Raffen und anwendungstechnischer Test werden gemäß Beschreibung in Beispiel 1 durchgeführt.
Die Ergebnisse der anwendungstechnischen Untersuchung sind in Tabelle 1 zusammengefaßt.

### Vergleichsbeispiele

Als Vergleichsbeispiele (V 6 bis V 10) sind Folienmuster geprüft worden, die den Beispielen 1 bis 5 entsprechen. Der Unterschied liegt im Unterlassen des Wässerungsschrittes nach der Wärmebehandlung. Im Gegensatz zu den füllfertig konditionierten Schlauchfolien aus den Beispielen 1 bis 5 wurden die Raufraupen (V 6 bis V 10) vor dem Befüllen mit Brät über einen Zeitraum von 15 Minuten bei 20°C gewässert.

Weitere Vergleichsmuster wurden in Form von einschichtigen, biaxial gereckten PA 6-Schläuchen, die nach der Wärmebehandlung dem Wässerungsschritt unterzogen wurden, mitgeprüft.
Dabei handelt es sich bei V 11 um einen Folienschlauch aus PA 6 und bei V 12 um einen Folienschlauch aus einem Polymerblend:
PA 6 (85 Gew.-%) und Ethylenacrylsäure-Copolymer (15 Gew.-%).

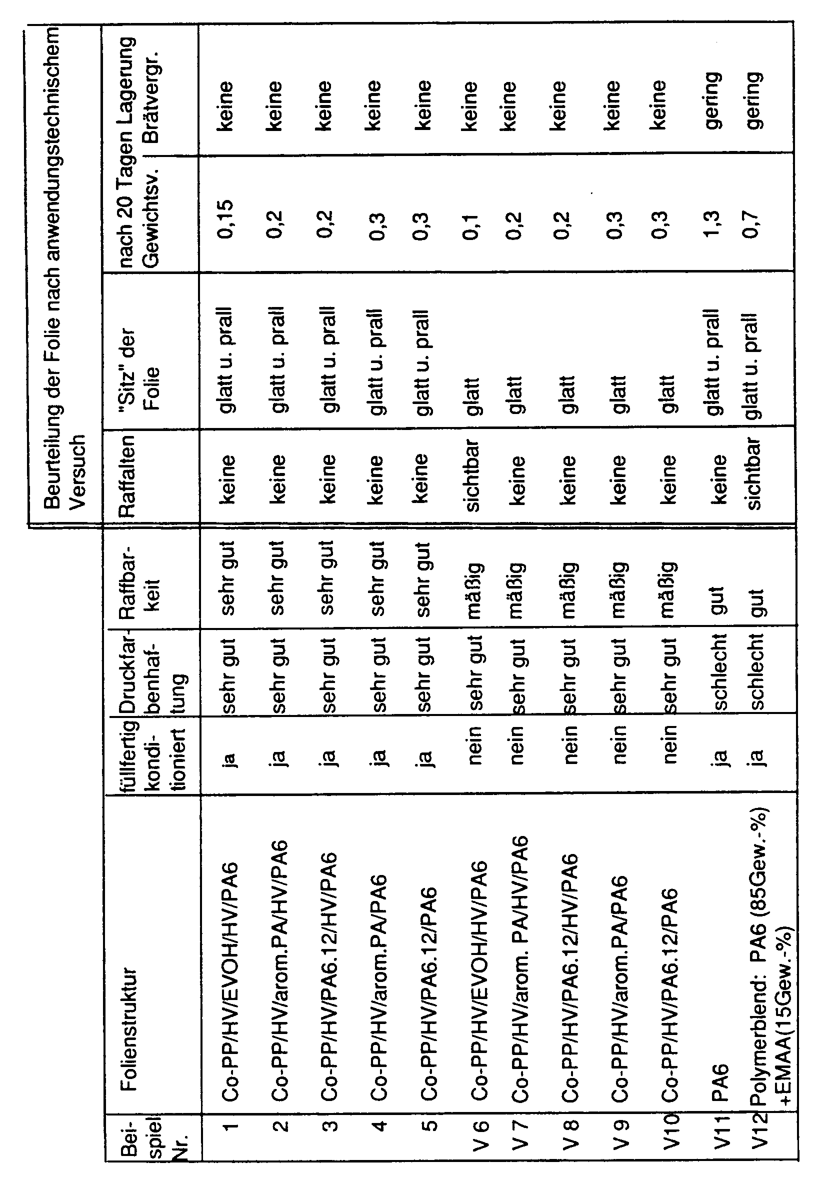

## Patentansprüche

1. Mehrschichtige, raffbare biaxial gereckte Schlauchfolie zur Umhüllung von in flüssigem oder pastösem Zustand abgepackten Füllgütern, insbesondere Lebensmitteln, die während und/oder nach der Abfüllung einer Wärmebehandlung erfahren, dadurch gekennzeichnet, daß diese aus mindestens 3 Schichten besteht, die
- als äußere Schicht mindestens 1 Wasserdampf-sperrende Lage aus olefinischen (Co-)Polymeren,
- als Kernschicht mindestens 1 Sauerstoff-sperrende Lage aus EVOH, aromatischen und/oder aliphatischem (Co-)-Polyamid,
- als innere Schicht die dem Füllgut zugewandt ist, mindestens 1 Lage aus aliphatischem (Co-)Polyamid.

2. Schlauchfolie nach Anspruch 1, dadurch gekennzeichnet, daß deren innenliegende PA-Schicht aus aliphatischem Polyamid wie z. B. PA 6, PA 11, PA 12, PA 66, PA 6.66, PA 6.8,6.9, PA 6.10, PA 6.11,6.12, einem Copolymer aus den darin enthaltenen Monomereinheiten oder einer Mischung der genannten aliphatischen Polyamide besteht.

3. Schlauchfolie nach den Ansprüchen 1 bis 2, dadurch gekennzeichnet, daß deren innenliegende PA-Schicht 70 bis 95 Gew.-% eines aliphatischen Polyamids und/oder Copolyamids und/oder Mischungen aus denselben und wenigstens ein
- (teil-)aromatisches PA und/oder
- olefinisches (Co-)Polymer ausgewählt aus EVA, EVOH, Ionomerharz, säuremodifizierte Olefin-(CO-)Polymere ausgewählt aus und/oder
- (CO-)Polyester
in Mengen von mindestens 5 bis höchstens 30 Gew.-%, bezogen auf das Gesamtgewicht des Polymergemisches, enthält.

4. Schlauchfolie nach den Ansprüchen 1 bis 3, dadurch gekennzeichnet, daß die innenliegende PA-Schicht eine Schichtstärke von 10 bis 35 µm aufweist.

5. Schlauchfolie nach den Ansprüchen 1 bis 4, dadurch gekennzeichnet, daß die innenliegende PA-Schicht vor der Schlauchfolienkonfektionierung mit keimfreiem Wasser behandelt wird.

6. Schlauchfolie nach wenigstens einem der vorhergehenden Ansprüche, dadurch gekennzeichnet, daß die außenliegende, dem Füllgut abgewandte Schicht, aus einem olefinischen Polymer, wie PE oder PP, einer Mischung derselben oder Copolymerem der darin enthaltenden Monomereinheiten, besteht.

7. Schlauchfolie nach wenigstens einem der vorhergehenden Ansprüche, dadurch gekennzeichnet, daß die das olefinische Polymer enthaltende Schicht eind Schichtstärke von 10 bis 30 µm aufweist.

8. Schlauchfolie nach wenigstens einem der vorhergehenden Ansprüche, dadurch gekennzeichnet, daß zwischen den außen- und innenliegenden Schichten eine Sauerstoff-sperrende Schicht aus Ethylen-Vinylalkohol-Copolymeren (EVOH), aromatischem und/oder aliphatischem (Co-)Polyamid angeordnet ist.

9. Schlauchfolie nach Anspruch 8, dadurch gekennzeichnet, daß die Vinyl-alkohol-Einheiten des EVOH-Copolymeren einen Anteil von 40 bis 80 Mol-% einnehmen.

10. Schlauchfolie nach Anspruch 8, dadurch gekennzeichnet, daß das aromatische PA durch Polykondensation von Meta-Xylylendiamin und Adipinsäure hergestellt wird.

11. Schlauchfolie nach Anspruch 8, dadurch gekennzeichnet, daß das aliphatische Copolyamid mindestens 75 Gew.-% Caprolactameinheiten einthält.

12. Schlauchfolie nach wenigstens einem der vorangehenden Ansprüche, dadurch gekennzeichnet daß zwischen den Schichten unterschiedlicher stofflicher Zusammensetzung Haftvermittlerschichten eingefügt sind.

13. Schlauchfolie nach wenigstens einem der vorhergehenden Ansprüche, dadurch gekennzeichnet, daß die Summe aller Schichtendicken zwischen 35 und 80 µm liegt.

14. Schlauchfolie nach wenigstens einem der vorhergehenden Ansprüche, dadurch gekennzeichnet, daß diese eine scrap-Schicht, bestehend aus dem Gemisch aller extrudierten Einzelschichten aufweist.

## Claims

1. Multilayered, tightenable, biaxially stretched tubular film for wrapping contents packed in liquid or paste-like condition, in particular foods, which during and/or after filling undergo a heat treatment, characterised in that this film consists of at least three layers, which comprise
- as outer layer, at least one layer acting as a barrier to water vapour and composed of olefinic (co)polymers,
- as core layer, at least one layer acting as an oxygen barrier and composed of (EVOH), aromatic and/or aliphatic (co)polyamide,
- as inner layer, which is nearest to the contents, at least one layer composed of aliphatic (co)polyamide.

2. Tubular film according to claim 1, characterised in that its inner PA layer consists of aliphatic polyamide such as, for example, PA 6, PA 11, PA 12, PA 66, PA 6,66, PA 6,8, 6,9, PA 6,10, PA 6,11, 6,12, of a copolymer composed of the monomer units contained therein or of a mixture of the above-mentioned aliphatic polyamides.

3. Tubular film according to claims 1 and 2, characterised in that its inner PA layer contains 70 to 95 wt.% of an aliphatic polyamide and/or copolyamide and/or mixtures of the same and at least one
- (partially) aromatic PA and/or
- olefinic (co)polymer, selected from EVA, EVOH, ionomer resin, acidically-modified olefin (co)polymers and/or
- (co)polyester
in quantities of at least 5 wt.% to at most 30 wt.%, based on the total weight of the polymer mixture.

4. Tubular film according to claims 1 to 3, characterised in that the inner PA layer has a layer thickness of from 10 to 35 µm.

5. Tubular film according to claims 1 to 4, characterised in that the inner PA layer is treated with sterile water prior to the production of the tubular films.

6. Tubular film according to at least one of the preceding claims, characterised in that the outer layer, away from the contents, consists of an olefinic polymer, such as PE or PP, of a mixture of the same or of copolymers of the monomer units contained therein.

7. Tubular film according to at least one of the preceding claims, characterised in that the layer containing the olefinic polymer has a layer thickness of from 10 to 30 µm.

8. Tubular film according to at least one of the preceding claims, characterised in that a layer acting as an oxygen barrier and composed of ethylene-vinyl alcohol copolymer (EVOH), aromatic and/or aliphatic (co)polyamide, is arranged between the outer and inner layers.

9. Tubular film according to claim 8, characterised in that the vinyl alcohol units of the EVOH copolymer take up a proportion of from 40 to 80 mol.-%.

10. Tubular film according to claim 8, characterised in that the aromatic PA is prepared by polycondensation of meta-xylylenediamine and adipic acid.

11. Tubular film according to claim 8, characterised in that the aliphatic copolyamide contains at least 75 wt.% of caprolactam units.

12. Tubular film according to at least one of the preceding claims, characterised in that adhesion-promoting layers are inserted between the layers composed of different materials.

13. Tubular film according to at least one of the preceding claims, characterised in that the sum of the layer thicknesses is between 35 and 80 µm.

14. Tubular film according to at least one of the preceding claims, characterised in that this film has a scrap layer consisting of the mixture of all the extruded individual layers.

## Revendications

1. Feuille multicouche extrudée en gaine, apte au fronçage, soumise à un étirage biaxe pour l'enveloppement de matières de remplissage, en particulier de denrées alimentaires emballées à l'état liquide ou pâteux, qui sont soumises à un traitement thermique pendant et/ou après le transvasement, caractérisée en ce qu'elle est constituée par au moins trois couches qui comprennent
- à titre de couche externe, au moins une couche arrêtant la vapeur d'eau, constituée d'un (co)polymère oléfinique,
- à titre de couche centrale, au moins une couche arrêtant l'oxygène, constituée de EVOH, d'un (co)polyamide aromatique et/ou aliphatique,
- à titre de couche interne qui est orientée vers la matière de remplissage, au moins une couche constituée d'un (co)polyamide aliphatique.

2. Feuille extrudée en gaine selon la revendication 1, caractérisée en ce que sa couche interne en PA est constituée d'un polyamide aliphatique tel que par exemple PA 6, PA 11, PA 12, PA 66, PA 6,66, PA 6,8, PA 6,9, PA 6,10, PA 6,11, PA 6,12, par un copolymère constitué par les unités de monomères qu'il contient ou encore par un mélange des polyamides aliphatiques mentionnés.

3. Feuille extrudée en gaine selon les revendications 1 à 2, caractérisée en ce que sa couche interne en PA contient, à concurrence de 70 à 95% en poids, un polyamide et/ou un copolyamide aliphatique et/ou des mélanges de ces derniers et au moins
- un PA (partiellement) aromatique et/ou
- un (co)polymère oléfinique choisi parmi le groupe comprenant le EVA, le EVOH, une résine ionomère, des (co)polymères oléfiniques modifiés par un acide et/ou
- un (co)polyester,
dans des quantités d'au moins 5 à 30% en poids au maximum rapportés au poids total du mélange polymère.

4. Feuille extrudée en gaine selon les revendications 1 à 3, caractérisée en ce que la couche interne en PA présente une épaisseur de couche de 10 à 35 µm.

5. Feuille extrudée en gaine selon les revendications 1 à 4, caractérisée en ce que la couche interne en PA est traitée avec de l'eau stérilisée avant le conditionnement de la feuille extrudée en gaine.

6. Feuille extrudée en gaine selon au moins une des revendications précédentes, caractérisée en ce que la couche externe se détournant de la matière de remplissage est constituée d'un polymère oléfinique tel que PE ou PP, d'un mélange de ces derniers ou encore de copolymères des unités monomères qu'il contient.

7. Feuille extrudée en gaine selon au moins une des revendications précédentes, caractérisée en ce que la couche contenant le polymère oléfinique présente une épaisseur de couche de 10 à 30 µm.

8. Feuille extrudée en gaine selon au moins une des revendications précédentes, caractérisée en ce qu'entre les couches externe et interne, est disposée une couche arrêtant l'oxygène, constituée d'un copolymère d'éthylène-alcool vinylique (EVOH), d'un (co)polyamide aromatique et/ou aliphatique.

9. Feuille extrudée en gaine selon la revendication 8, caractérisée en ce que les unités d'alcool vinylique du copolymère EVOH représentent une fraction de 40 à 80 moles %.

10. Feuille extrudée en gaine selon la revendication 8, caractérisée en ce qu'on prépare le PA aromatique par polycondensation de méta-xylylènediamine et d'acide adipique.

11. Feuille extrudée en gaine selon la revendication 8, caractérisée en ce que le copolyamide aliphatique contient des unités de caprolactame à concurrence d'au moins 75% en poids.

12. Feuille extrudée en gaine selon au moins une des revendications précédentes, caractérisée en ce qu'on intercale des couches d'accrochage entre les couches présentant une composition de matières différente.

13. Feuille extrudée en gaine selon au moins une des revendications précédentes, caractérisée en ce que la somme de toutes les épaisseurs de couches se situe entre 35 et 80 µm.

14. Feuille extrudée en gaine selon au moins une des revendications précédentes, caractérisée en ce qu'elle présente une couche pelliculable constituée par le mélange de toutes les couches individuelles extrudées.
